# EUROPEAN PATENT APPLICATION

(11) **EP 1 492 341 A1**
(43) Date of publication of application: **29.12.2004**
(21) Application number: 03715712.0
(22) Date of filing: 01.04.2003
(51) Int. Cl.: H04N 5/91, H04N 7/18

(54) **VIDEO RELAY DEVICE, VIDEO DISTRIBUTION SYSTEM, VIDEO RELAY METHOD**

(30) Priority: 03.04.2002 JP 2002101545
(71) Applicant: MITSUBISHI DENKI KABUSHIKI KAISHA, Tokyo 100-8310 (JP)
(72) Inventor: Wakimoto, Koji, Mitsubishi Denki Kabushiki Kaisha, Tokyo 100-8310 (JP); Kanda, Junshiro, Mitsubishi Denki K. K., Tokyo 100-8310 (JP); Kanoya, Yukikazu, Mitsubishi Denki K. K., Tokyo 100-8310 (JP); Shima, Mitsuhide, Mitsubishi Denki K. K., Tokyo 100-8310 (JP)
(74) Representative: Nicholls, Michael John
(86) International application number: PCT/JP2003/004186
(87) International publication number: WO 2003/084225

(57) **Abstract**

By inserting a video relay apparatus 100 between a server 200 and a terminal 400 in a conventional general video distribution system, it is possible to display the video with a high quality by the video distribution system using the communication unit having a limited transmission capacity even if the video cannot be previously stored in the video relay apparatus. The video relay apparatus 100 is provided with a receiving unit 10 for receiving the video, a storing unit 20 for temporarily storing the received video, an area defining unit 60 for dividing the video so as to define the areas, an area classifying unit 70 for classifying the areas defined by the area defining unit 60, a video reconstructing unit 30 for skipping the video or adjusting the quality of the defined area of video by the area defining unit 60 and reconstructing the video based on the classified result by the area classifying unit 70, and a sending unit 40 for sending the reconstructed video by the video reconstructing unit 30.

## Description

### Technical Field

The present invention relates to a video relay apparatus and a video relay method being placed between a server and a terminal for relaying video in a video distribution system distributing such as video of a monitoring camera over the Internet.

### Background Art

Conventionally, such as RealSystem of RealNetworks, Inc. is known as an example of a system for distributing video over the Internet. In such a system, a technique for streaming distribution is employed for continuously sending digitized video data from a server to a terminal and for reproducing the data while receiving the data by the terminal.

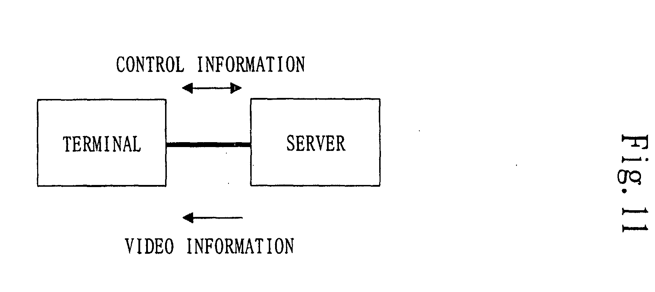

Fig. 11 explains a general video distribution system.

Usually, two kinds of information of control information and video information are sent/received between a server and a terminal. Such as RTSP (Real Time Streaming Protocol) is known as a protocol for sending/receiving the control information, and such as RTP (Real Time Transfer Protocol) for sending/receiving the video information. When the terminal sends the control information requesting the video to the server, the server starts the distribution of the video in response to the request. The terminal is configured so as to receive the video information sent from the server and for displaying the video information on a screen.

Types for distribution of the video from the server to the terminal can be roughly classified into two: live distribution and contents distribution. The live distribution is a system close to live broadcasting of the television, and it directly distributes real time video that has been shot by the camera. In this type, a user, of course, cannot watch the video that he/she wants to watch at his/her convenient time. On the other hand, the contents distribution is a type that distributes the video that is already stored by the server, and this type can be further divided into a broadcasting type and an on-demand type. The contents distribution of broadcasting type is similar to a relay of recorded video of the television, and programs are distributed according to a predetermined schedule, so that the user, of course, cannot watch the video that he/she wants to watch at his/her convenient time, either. On the other hand, in the contents distribution of on-demand type, the user can select and watch any preferred video at his/her convenient time, and further it is possible to control play back, stop, and seek as well as a video tape recorder.

Generally, for the digitized video, it is required to increase amount of data to improve the quality of the video, and on the contrary, to decrease the amount of data degrades the quality of the video. Factors such as frame rate and image quality determine the quality of video. The frame rate is the number of frames per second (fps), and the image quality is quality of image of each frame that is determined by the resolution or the number of gradation levels.

When, for instance, an ISDN (Integrated Services Digital Network) line, which is generally used as a line for accessing the Internet, is used, the video is transferred with a limited frame rate and image quality, so that the motion of the video is not so smooth compared with the normal television video image, and only the video image which lacks clearness is distributed. On the other hand, in order to distribute the video with as good quality as television video image, it is necessary to secure equal to or greater than several times as much capacity of transmission as one of the ISDN line, which causes a problem of expensive communication charge.

To solve this problem, a method can be considered, in which a part or all of video data is previously stored in a relay apparatus and the stored video data is read and reproduced. For instance, according to a video stream distribution method disclosed in the Japanese Unexamined Patent Publication No. 2001-25023, by previously storing a part of the video in the relay apparatus, it becomes possible to reproduce the video stream having data amount which is equal to or greater than the capacity of the transmission line. Further, according to a time-sequential data storage distribution system disclosed in the Japanese Unexamined Patent Publication No. 2000-209258, when video which is not previously stored in the relay apparatus is requested, the reproduction of the requested video is delayed, or in another way, the distribution with a low quality is performed for a while, the video data is stored in the relay apparatus placed between a server and a terminal during this period, and when enough amount of video data is stored, the relay apparatus starts the distribution with a high quality using the stored video data.

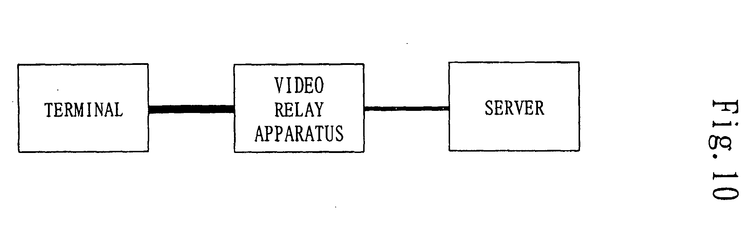

Fig. 10 shows a common configuration of the above two video distribution systems using the relay apparatus.

Here, it is assumed that sufficient communication rate is secured to distribute the video data with a high quality between the relay apparatus and the terminal. In this system, the relay apparatus acts as a server for the terminal and acts as a terminal for the server. That is, first, the terminal sends control information to request for the video distribution to the relay apparatus. The relay apparatus checks if the requested video has been already stored, and if stored, the relay apparatus distributes the video information to the terminal. When the requested video has not been stored, the relay apparatus sends the control information requesting for the distribution of the video to the server. The server starts the distribution of the video upon receiving this request. The relay apparatus receives the distribution, stores it, and at the same time, distributes it to the terminal.

The conventional video relay apparatus is configured as discussed above. In a type of contents distribution, by previously transferring and storing some amount of the video data, which exceeds the capacity of the transmission line, to the relay apparatus, it becomes possible to reproduce the video data with a high quality. Further, since the relay apparatus acts as the terminal for the server, the reproduction of the video data with a high quality can be performed without changing the configuration of the server by inserting the relay apparatus into the video distribution system which is configured by the server and the terminal.

In case of checking the video of a monitoring camera remotely, a type of live distribution is required, since the terminal side wants to immediately reproduce the video shot by the camera to check the video. In this case, it is impossible to previously store the video data in the relay apparatus like the above video distribution system using the conventional video relay apparatus. Accordingly, there is a problem that when the terminal side wants to immediately reproduce and check the video such as in case of remotely monitoring the video, the conventional video relay apparatus cannot reproduce the video with a high quality, the amount of which exceeds the capacity of the transmission line.

Further, even if the contents distribution is used, on-demand video distribution requires to distribute the video selected by the user among many kinds of videos, and it is difficult to previously distribute all the videos that are possibly selected by the user to the video relay apparatus.

In particular, in the time sequential data storage distribution system disclosed in the Japanese Unexamined Patent Publication No. 2000-209258, when the video, which has not been previously stored in the relay apparatus, is requested, the reproduction of the requested video is postponed, or the distribution is performed with a low quality for a certain period, and during the period, the video data is stored in the relay apparatus placed between the server and the terminal, and when sufficient amount of the video data is stored, the distribution with a high quality is started from the relay apparatus to the terminal using the stored video data. In this case, however, if the quality of the video data to be distributed from the server to the relay apparatus is set high, it is necessary to wait for a long time until the sufficient amount of the video data is stored. On the contrary, if the quality of the video data to be distributed from the server to the relay apparatus is set low, there is a problem that it becomes impossible to display a part of the video data, which is intended to reproduce with a high quality.

The present invention is made to solve the above problems, and a video relay apparatus is inserted between the server and the terminal located in the general video distribution system. By doing so, the invention aims to obtain a video relay apparatus and a video distribution system, which can display and check the video with a high quality by the video distribution system using the communication unit having a limited communication capacity, even if the video data cannot be previously stored in the video relay apparatus.

### Disclosure of the Invention

According to the present invention, a video relay apparatus includes:
a receiving unit for receiving video;
a storing unit for temporarily storing the video received by the receiving unit;
an analyzing/classifying unit for analyzing the video and classifying the video into areas;
a video reconstructing unit for changing quality of the video stored in the storing unit based on a classified result by the analyzing/classifying unit and reconstructing the video; and
a sending unit for sending the video reconstructed by the video reconstructing unit.

The video reconstructing unit changes the quality of the video by adjusting at least one of a selection of the video, a change of image quality of the video, and a reproducing speed of the video.

The analyzing/classifying unit includes:
an area defining unit for dividing the video into periods so as to define concerned areas; and
an area classifying unit for classifying the areas defined by the area defining unit.

The analyzing/classifying unit further includes a video analyzing unit for analyzing the video,
the area defining unit defines the area based on an analysis result by the video analyzing unit, and
the area classifying unit classifies the area based on the analysis result by the video analyzing unit.

The video analyzing unit analyzes a change amount of at least one of an object and an imaging device,
the area classifying unit classifies the areas into a static period and a dynamic period based on the change amount of at least one of the object and the imaging device, and
the video reconstructing unit reconstructs the video by increasing the quality for the dynamic period.

The video analyzing unit analyzes a change amount of at least one of an object and an imaging device,
the area classifying unit classifies the areas into a static period and a dynamic period based on the change amount of at least one of the object and the imaging device, and
the video reconstructing unit reconstructs the video by decreasing the quality for the dynamic period.

The video analyzing unit detects a motion of an object,
the area classifying unit classifies the area into an area including the object and an area not including the object, and
the video reconstructing unit selects the area including the object and reconstructs the video.

The area defining unit receives manipulated information of a user from a terminal and divides the video to the area based on the information.

The area classifying unit receives manipulated information from the user at the terminal and classifies the area based on the information.

According to the present invention, a video distribution system distributing video from a server to a terminal includes
a video relay apparatus, located between the server and the terminal, having:
a receiving unit for receiving the video;
a storing unit for temporarily storing the video received by the receiving unit;
an analyzing/classifying unit for analyzing the video stored by the storing unit and classifying the video into areas;
a video reconstructing unit for changing quality of the video stored by the storing unit and reconstructing the video based on a classified result by the analyzing/classifying unit; and
a sending unit for sending the video reconstructed by the video reconstructing unit, and
the video reconstructing unit of the video relay apparatus reconstructs the video by reducing reproducing speed of the video for specified areas among the areas classified.

According to the present invention, a video distribution system for distributing video from a server to a terminal includes two video relay apparatuses, as a first video relay apparatus and a second video relay apparatus, located between the server and the terminal, each of the two video relay apparatuses having:
a receiving unit for receiving the video;
a storing unit for temporarily storing the video received by the receiving unit;
an analyzing/classifying unit for analyzing the video stored by the storing unit and classifying the video into areas;
a video reconstructing unit for changing quality of the video stored by the storing unit and reconstructing the video based on a classified result by the analyzing/classifying unit; and
a sending unit for sending the video reconstructed by the video reconstructing unit,
the first video relay apparatus reconstructs the video by reducing a reproducing speed of the video for specified areas among the areas classified and sends the video to the second video relay apparatus, and
the second video relay apparatus reconstructs the video received from the first video relay apparatus by changing the reproducing speed back to an original reproducing speed.

The video relay apparatus receives a request from the terminal and sends video of an arbitrary time stored in the storing unit based on the request.

According to the present invention, a video distribution system for distributing video from a server to a terminal includes two video relay apparatuses, as a first video relay apparatus and a second video relay apparatus, located between the server and the terminal, each of the two video relay apparatuses having:
a receiving unit for receiving the video;
a storing unit for temporarily storing the video received by the receiving unit;
an analyzing/classifying unit for analyzing the video stored by the storing unit and classifying the video into areas;
a video reconstructing unit for changing quality of the video stored by the storing unit and reconstructing the video based on a classified result by the analyzing/classifying unit; and
a sending unit for sending the video reconstructed by the video reconstructing unit,
the second video relay apparatus receives a request from the terminal and sends the request from the terminal to the first video relay apparatus,
the first video relay apparatus receives the request from the second video relay apparatus and sends the video of an arbitrary time stored in the storing unit based on the request, and
the second video relay apparatus stores the video sent from the first video relay apparatus and distributes the video to the terminal.

According to the present invention, a video distribution system for distributing video from a server to a terminal includes a first video relay apparatus and a second video relay apparatus located between the server and the terminal,
the first video relay apparatus reconstructs the video of specified areas by reducing a reproducing speed and sends the video to the second video relay apparatus, and
the second video relay apparatus reconstructs the video received from the first video relay apparatus by changing the reproducing speed back to an original reproducing speed.

According to the present invention, a video distribution system for distributing video from a server to a terminal includes a first video relay apparatus having a first storing unit for storing the video and a second video relay apparatus having a second storing unit for storing the video located between the server and the terminal,
the second video relay apparatus receives a request from the terminal and sends the request to the first video relay apparatus,
the first video relay apparatus receives the request from the second video relay apparatus and sends the video of an arbitrary time stored in the first storing unit of the first video relay apparatus to the second video relay apparatus based on the request, and
the second video relay apparatus stores the video sent from the first video relay apparatus in the second storing unit of the second video relay apparatus and distributes the video to the terminal.

According to the present invention, a video relay method includes:
receiving video through a communication line;
temporarily storing the video received in a memory;
analyzing the video stored in the memory and classifying the video into areas;
reconstructing the video based on a classified result by changing quality of the video stored in the memory; and
sending the video reconstructed.

### Brief Explanation of the Drawings

Fig. 1 is a configuration example of a video relay apparatus 100 according to the first embodiment.
Fig. 2 shows a configuration example of a video distribution system using the video relay apparatus 100 of the first embodiment.
Fig. 3 explains an operation of a video analyzing unit of the first embodiment.
Fig. 4 shows a configuration of a video distribution system according to the second embodiment.
Fig. 5 explains a concept of the video distribution system according to the second embodiment.
Fig. 6 shows examples of received video according to the third embodiment.
Fig. 7 explains operations of an area defining unit and a video reconstructing unit according to the third embodiment.
Fig. 8 shows examples of a terminal screen of the fourth embodiment.
Fig. 9 shows an example of a screen of a terminal 400 in a video distribution system according to the fifth embodiment.
Fig. 10 explains a configuration of a video distribution system using a conventional video relay apparatus.
Fig. 11 explains a common video distribution system.
Fig. 12 shows an operational flowchart of an analyzing/classifying unit 80 of the first embodiment.
Fig. 13 shows an operational flowchart of a video reconstructing unit 30 of the first embodiment.
Fig. 14 shows an example of selecting operation of image frames by the video reconstructing unit 30 for a dynamic period and a static period according to the first embodiment.
Fig. 15 shows an interrupt distribution of "past video" according to the sixth embodiment.
Fig. 16 shows an example of the screen of the terminal 400, displaying a list of images according to the seventh embodiment.

### Preferred Embodiments for Carrying out the Invention

### Embodiment 1.

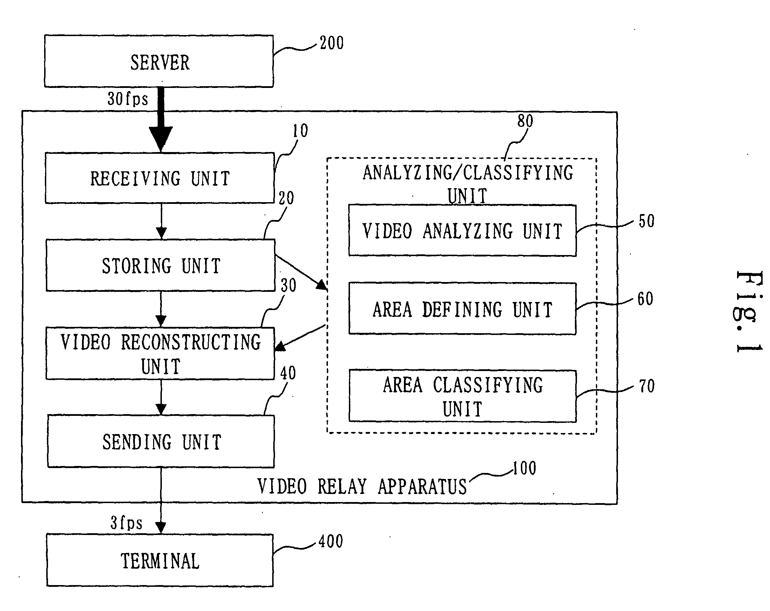

Fig. 1 shows a configuration example of a video relay apparatus 100 of the present invention.

Each of configuring elements in the figure shows function conceptually, and it does not always correspond to physical configuration. The configuring element can be, in practice, embodied by hardware, a memory, a buffer, a storage device, an electronic circuit, a semi-conductor chip, firmware and a software program executable on computers. Accordingly, "a unit," which will be discussed below, can be anything that is embodied by one of and/or a combination of hardware, a memory, a buffer, a storage device, an electronic circuit, a semi-conductor chip, firmware and/or a software program executable on computers. Physically, "a unit" can be implemented as a type of a system unit, a device, a component, a board, or a program.

In another way, "a unit" can be implemented by only hardware, only software, or a combination of them.

Further, if the word "a unit" means something that realizes the aftermentioned function, the word "a unit" can be replaced by "a means," and if it means something that realizes the aftermentioned mechanism, the word "a unit" can be also replaced by "a mechanism." Similarly, the word "a unit" can be replaced by "a circuit," "software," "a program," or "an apparatus." Further, "a unit," which will be discussed below, can be divided into "subunits," or two units can be combined to form one unit.

Fig. 1 shows a case in which the video relay apparatus 100 is inserted between a server 200 and a terminal 400 of a conventional common video distribution system.

The video relay apparatus 100 includes: a receiving unit 10 for receiving video into a receiving buffer; a storing unit 20 for temporarily storing the video received by the receiving unit; an analyzing/classifying unit 80 for analyzing the video stored in the storing unit 20 and classifying the video into areas of time period; a video reconstructing unit 30 for changing quality of the video stored in the storing unit 20 to reconstruct the video according to the classified result by the analyzing/classifying unit 80; and a sending unit 40 for sending the video reconstructed by the video reconstructing unit 30 from a sending buffer.

The analyzing/classifying unit 80 includes: a video analyzing unit 50 for analyzing amount of change of at least one of an object and an imaging device, analyzing the video, and storing analyzed result in a memory; an area defining unit 60 for dividing the video by a time period to define areas of the time period; and an area classifying unit 70 for classifying the areas defined by the area defining unit to a dynamic period and a static period.

The area defining unit 60 defines the areas based on analyzed result by the video analyzing unit 50 and stores the defined areas in a memory, and the area classifying unit 70 classifies the areas based on the analyzed result by the video analyzing unit 50 and stores the areas in the memory.

The video reconstructing unit 30 adjusts at least one of a skip of the video, a change of the image quality of video, and a reproducing speed of the video to modify the quality of the video.

The video reconstructing unit 30, in the dynamic period, increases the quality to reconstruct the video. Further, the video reconstructing unit 30, in the static period, decreases the quality to reconstruct the video.

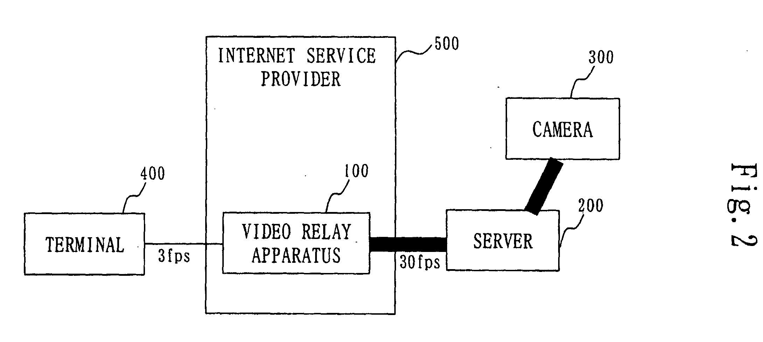

Fig. 2 shows a configuration example of a video distribution system using the video relay apparatus 100 of the invention.

Here, for instance, a case is considered, in which a fixed camera 300 shoots a particular parking space, and a terminal 400 placed remotely observes the shooting. A server 200 can be located near the fixed camera 300, or can be located in a different place and connected by communication line. The video shot by the fixed camera 300 is input to the server 200 with 30 frames per second as digital data. The server 200 sequentially transmits the video input from the fixed camera 300. Here, a transmission request from the terminal 400 is received with RTSP (Real Time Streaming Protocol) and the video is sent to the terminal 400, which is the sender of the request, with RTP (Real Time Transfer Protocol).

On the other hand, the terminal 400 is implemented by a desktop personal computer, which is placed at the observer's side and receives the video and runs a program for reproduction. By connecting the terminal 400 directly to the server 200 via the communication line, it is possible to watch the live video shot by the fixed camera 300 using the terminal 400; however, the quality of the video is limited by the transmission capacity of the communication line. Here, it is assumed that the terminal 400 is connected to the Internet through an Internet service provider 500 with modem connection, etc.

In the present embodiment, the video relay apparatus 100 is placed in the Internet service provider 500, and the video relay apparatus 100 and the terminal 400, the video relay apparatus 100 and the server 200 are connected via the communication lines, respectively. It is assumed that enough transmission capacity is provided between the video relay apparatus 100 and the server 200, so that the video can be distributed at 30 frames per second. On the other hand, it is assumed the transmission capacity between the video relay apparatus 100 and the terminal 400 is limited, so that the video can be distributed at only 3 frames per second.

Next, the operation will be explained.

First, the terminal 400 issues control information to request for distribution of video to the video relay apparatus 100. The video relay apparatus 100 further issues this control information to the server 200. In response to this distribution request, the server 200 starts the distribution of the video to the video relay apparatus 100.

The receiving unit 10 of the video relay apparatus 100 receives the video data distributed from the server 200 and sequentially stores the received data in the storing unit 20.

The area defining unit 60 divides the video to define areas.

Concept of the areas will be explained, hereinafter.

Here, the video is treated as three dimensional video data having XYZ coordinates, which is formed by aligning two dimensional video data having X and Y axes along Z axis, which is a time axis, and a group of components that form a part of the alignment of three dimensional data is referred to as an area. Namely, the area can be defined by start time on Z axis, end time on Z axis, and locations (XY coordinates) on the video at certain times (Z coordinates) between the start time and the end time.

In this embodiment, the area defining unit 60 does not divide the image that forms one frame having XY coordinates into multiple areas on the XY coordinates, but a time period that is formed by dividing the video along the time axis (Z axis) is defined as the area.

To divide the video, it is possible to simply divide the video by a predetermined number of seconds. The following shows another way to divide the video based on a change amount of the object or the imaging device detected by the video analyzing unit 50.

First, analysis of the change of the object or the imaging device (the camera 300) performed by the video analyzing unit 50 will be discussed.

Here, the change of the object means, for instance, motion, movement, deformation, etc. of the object. Further, the change of the imaging device means, for instance, change of setting location of the camera, change of shooting direction due to such as the rotation of the camera, enlargement/reduction of view angle of the camera due to zooming-in/out, etc.

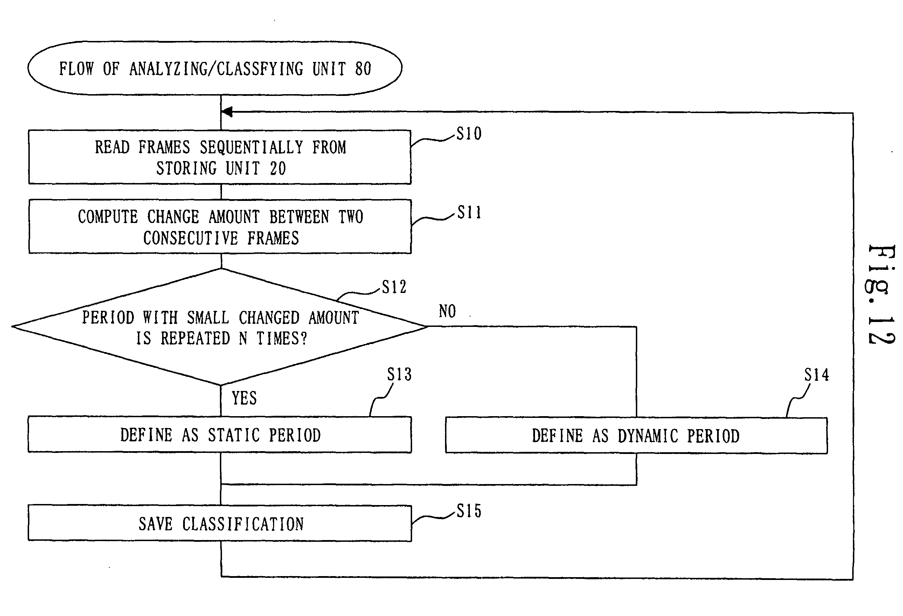

Fig. 12 is a flowchart showing the operation of the analyzing/classifying unit 80.

To determine the change amount of the object or the imaging device, the video analyzing unit 50 reads the video from the storing unit 20 (S10) to analyze it (S11). The change amount is determined by, for instance, comparing two adjacent frames and counting the number of pixels, whose luminance is changed by at least predetermined amount. Or the change amount can be determined by statistically analyzing such as color of the pixel or tone of each frame, obtaining histogram for each frame, and evaluating differences between histograms. In another way, the change amount can be also determined by obtaining a corresponding point in another frame for some pixels included in a certain frame using a pattern matching method and evaluating move amount of each the pixels.

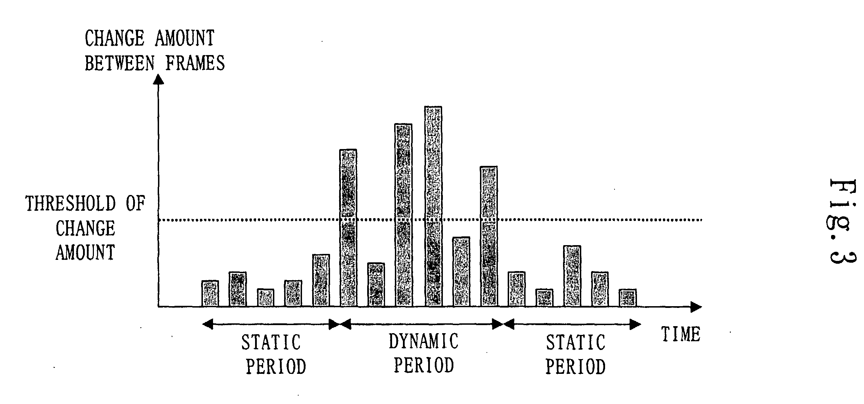

The area defining unit 60 defines the area based on change amount obtained as above (S12). Namely, as shown in Fig. 3, when a period in which the change amount remains equal to or less than predetermined amount for at least a predetermined time period, the period is defined as the static period (S13), and any other period is defined as the dynamic period (S14). The area defining unit 60 defines periods by dividing the video at a point of switching the static period and the dynamic period.

The area classifying unit 70 classifies each area into the static period and the dynamic period based on the definition of the above static period and the dynamic period and keeps the classified result (S15).

The video reconstructing unit 30 reconstructs the video by adjusting the quality of the video with selecting the areas, changing the image quality, etc. On dividing the video into the static period and the dynamic period, the dynamic period is important. Accordingly, in the dynamic period, the video received from the server 200 is transmitted with a high quality, and in the static period, the video can be transmitted with a low quality. In another way, it is possible to transmit the video only for the dynamic period, not for the static period.

Here, the communication line connected between the video relay apparatus 100 and the terminal 400 can transmit only 3 frames per second (3fps). If the frame rate is set to 15 frames per second (15 fps) to increase the quality of the video for the dynamic period, the reproducing speed has to be reduced to one fifth in order to transmit the video using this communication line. On the other hand, for the static period, the video is never transmitted, or transmitted with less quality by setting the frame rate to around 1fps through 3 fps.

With the above setting, it takes longer than an actual reproducing time to transmit the video in the dynamic period, and takes the same as or shorter than the actual time for the static period.

In the dynamic period, a delay time occurs in the video relay apparatus 100, and during this delay time, the storing unit 20 stores the video. Namely, the increase of the delay time means the increase of undistributed video stored in the storing unit 20. However, in case of observing parking/leaving of a car parking space, etc., the dynamic period is assumed to be very short in a whole observation time, so that there is no need to worry about unlimited storing of the video in the storing unit 20 due to the delay time.

On the contrary, if the frame rate is set to around 1 fps in the static period, the reproducing speed can be tripled, which reduces the delay time. Accordingly, in the static period, the amount of undistributed video left in the storing unit 20 is monitored, and when the delay time is equal to or greater than a predetermined length, the quality of the video is set to around 1 fps to triple the reproducing speed, and when the delay time is equal to or less than the predetermined length, the quality of the video is set to around 3 fps to make the reproducing speed normal.

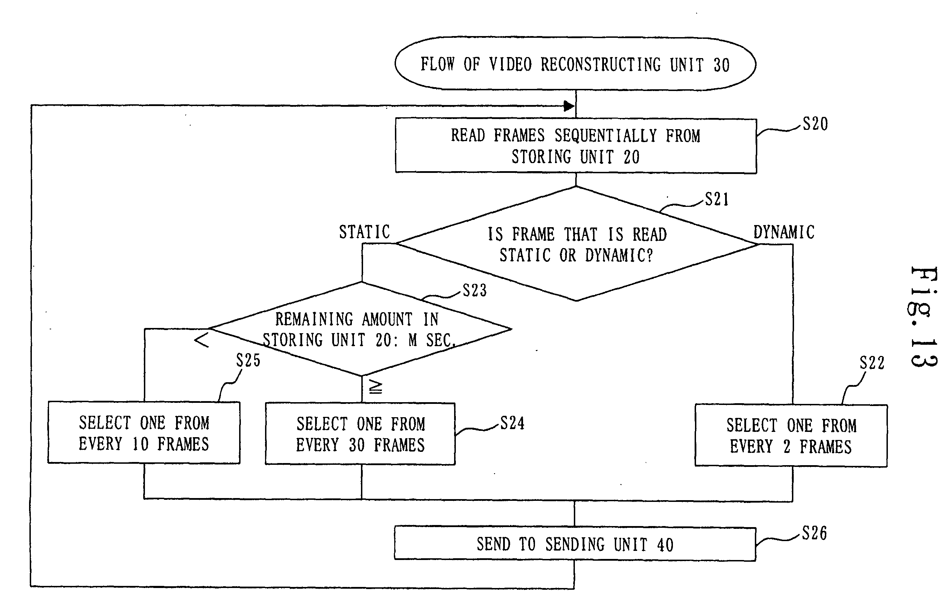

Fig. 13 is a flowchart showing the operation of the video reconstructing unit 30.

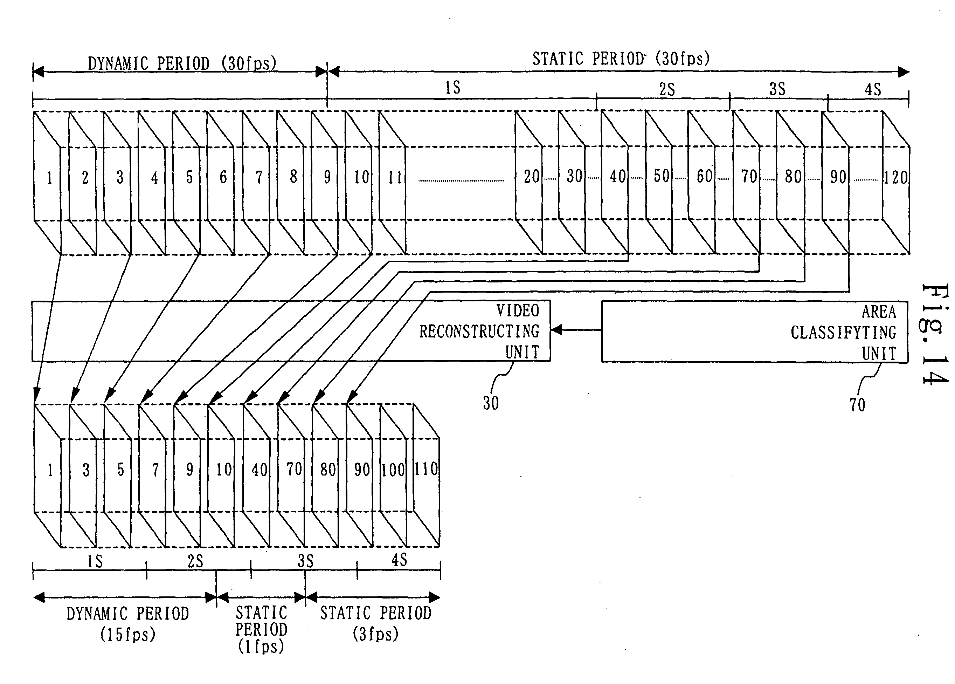

Fig. 14 shows an example of the selection/skipping operation of the video frames by the video reconstructing unit 30 in the dynamic periods and the static periods.

The video reconstructing unit 30 reads the video data (an image frame) stored in the storing unit 20 in order of time axis (time sequentially) (S20). The video reconstructing unit 30 refers to the classified result held by the area classifying unit 70 and determines the video frame, which is read, is either in the static period or in the dynamic period (S21).

To increase the quality of the video, if the frame rate is assumed to set to around 15 frames per second (15 fps) in the dynamic period, the video reconstructing unit 30 selects one frame from every two frames (S22) from frame 1 through frame 9 in the dynamic period of Fig. 14.

On the contrary, if the frame rate is set to around 1 fps in the static period, the video reconstructing unit 30 monitors the delay time, namely, the amount of the undistributed video (remaining amount) left in the storing unit 20 (S23). If, for instance, the delay time for each of frame 10 through frame 79 in Fig. 14 is equal to or greater than a predetermined time (M seconds), the video reconstructing unit 30 selects frames 10, 40, and 70, that is, one from every 30 frames from frame 10 through 70 (S24), sets the video quality to around 1 fps, and triples the reproducing speed. Further, for instance, if the delay time is equal to or less than the predetermined time (M seconds) for each of frames on and after frame 80 in Fig. 14, the video reconstructing unit 30 selects frames 80, 90, 100, 110, ..., that is, one from every 10 frames from the frames on or after frame 80 (S25), sets the video quality to around 3 fps, and makes the reproducing speed normal.

The sending unit 40 sends the video reconstructed by the video reconstructing unit 30 to the terminal 400.

The terminal 400 receives the above reconstructed video and displays on the screen. The video of the static period is reproduced at the normal reproducing speed or triple speed, and the video of the dynamic period is reproduced in slow motion, that is, at one fifth of the normal speed. The video that the user wants to pay attention is mainly the video of the dynamic period, it is convenient for the user to see the video of the dynamic period reproduced in slow motion.

Further, according to this embodiment, the above effect is obtained only by inserting the video relay apparatus 100 to the conventional video distribution system configured by the server 200 and the terminal 400, with almost no change of the server 200 or the terminal 400.

On considering a case in which the video of the monitoring camera is displayed and checked remotely, it is not necessary to display all the video with a high quality, but it is enough to selectively displays a period in which a specific event occurs or a location where a certain object is shot with a high quality.

As discussed above, the video relay apparatus of the present embodiment includes:
the receiving unit 10 for receiving the video;
the storing unit 20 for temporarily storing the video received;
the area defining unit 60 for dividing the video and defining the area;
the area classifying unit 70 for classifying the area defined by the area defining unit 60;
the video reconstructing unit 30 for reconstructing the video of the area defined by the area defining unit 60 by selecting the video or adjusting the quality according to the classified result by the area classifying unit 70; and
the sending unit 40 for sending the video reconstructed by the video reconstructing unit 30.

According to the video relay apparatus, the video reconstructing unit 30 reconstructs the video by selecting the video or adjusting the quality for every area based on area information classified by the area classifying unit 70 and sends the reconstructed video to the terminal 400, so that the terminal 400 can display a certain area selectively with a high quality.

The first feature of this embodiment is that the video data sent from the server 200 is not selected to store in the storing unit 20, but normal video data sent from the server 200 is stored in the storing unit 20 as it is without selection. Because of this, the server 200 does not need to be changed. The second feature is that the video stored in the storing unit 20 is selected or the quality of the stored video is adjusted to reduce the load of the transmission line. Accordingly, even if the capacity of the transmission line is low at the sender's side, it is possible to adjust the amount of the data to the transmission capacity of the sender's side. The third feature is that the video is reconstructed so that the video quality is increased for a concerned area such as the dynamic period, while the video quality is decreased for an unconcerned area such as the static period. Consequently, a part of the video, in which the change amount is large, can be reproduced with a high quality.

### Embodiment 2.

In the following, another embodiment will be explained, in which two video relay apparatuses are inserted between the server 200 and the terminal 400.

The configuration of the two video relay apparatuses are almost the same as one in the first embodiment.

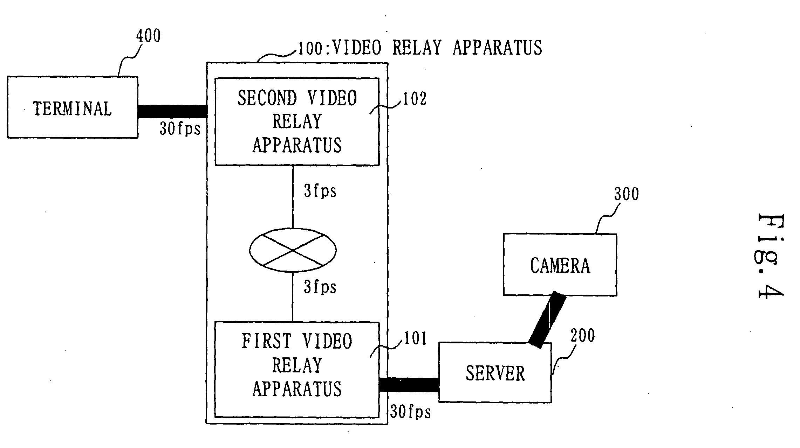

Fig. 4 shows a configuration of the video distribution system of the present embodiment.

In this embodiment, the first video relay apparatus 101 is placed in such as the Internet service provider 500 as well as in the first embodiment. The second video relay apparatus 102 is placed, for example, in the same premise as the terminal 400, and is connected with the terminal 400 via LAN (Local Area Network). Sufficient transmission capacity is provided each of between the first video relay apparatus 101 and the server 200, and the second video relay apparatus 102 and the terminal 400, so that it is possible to transmit the video at around 30 frames per second. On the other hand, only 3 frames per second can be transmitted between the first video relay apparatus 101 and the second video relay apparatus 102.

In the following, the operation will be explained.

First, the terminal 400 issues control information to request the distribution of the video to the second video relay apparatus 102. The second video relay apparatus 102 transmits the control information further to the first video relay apparatus 101. The first video relay apparatus 101 issues this control information further to the server 200. In response to this distribution request, the server 200 starts the video distribution to the first video relay apparatus 101.

The operation of the first video relay apparatus 101 is basically the same as one in the first embodiment. However, the sending unit 40 does not send the video to the terminal 400 but sends to the second video relay apparatus 102.

Next, the operation of the second video relay apparatus 102 will be explained.

The receiving unit 10 receives the video data distributed from the first video relay apparatus 101 and sequentially stores the data received in the storing unit 20. The area defining unit 60 divides the video and defines the area. The division of the video can be performed based on the video analysis result by the video analyzing unit 50 as well as the first video relay apparatus 101, or the area definition result defined in the first video relay unit can be transmitted via the communication line.

Further, the area classifying unit 70 classifies each area into the static period and the dynamic period and saves the classified result. This classification can be performed using the video analysis result by the video analyzing unit 50 as well as the first video relay apparatus 101 or the area definition result defined in the first video relay apparatus 101 can be transmitted via the communication line.

The video reconstructing unit 30 of the second video relay apparatus 102 reconstructs the video. At receiving time, the reproducing speed of the video of the dynamic period is one fifth of the normal, so that the reproducing speed is returned to the original reproducing speed.

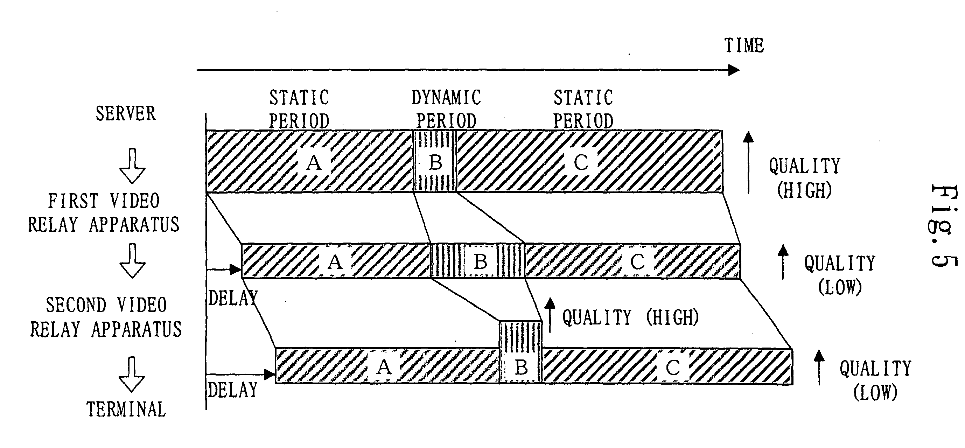

Fig. 5 explains the video distribution based on the above view.

A horizontal axis shows time. A left vertical axis shows an order of the transmission and the reconstruction of the video data. A height of the video data (a vertical width of the drawing) shows the quality of the video data.

First, the first video relay apparatus 101 at the server 200 side generates the video with a low quality for the area determined as the static period by decreasing the video quality or the frame rate and transmits to the second video relay apparatus 102 of the terminal 400. In the video reconstructing unit 30 of the first video relay apparatus 101, the video quality of each frame can be decreased by once extending the received data, which has been compressed by the server 200, and decreasing the quality again to recompress the data. Or if the compression type is capable to gradually extend like progressive type defined in JPEG (Joint Photographic Experts Group), only necessary part is extracted from the data and transmitted. Further, in the video reconstructing unit 30 of the first video relay apparatus 101, for decreasing the frame rate, for example, the frame rate can be halved by extracting and transmitting one from every another frame. Here, in the video reconstructing unit 30 of the first video relay apparatus 101, it is assumed that the frame rate of the video of 30 fps is decreased to 1 fps to around 3 fps. By doing so, it is possible to transmit the video using the communication line that is capable to transmit 3 frames per second. In the video reconstructing unit 30 of the first video relay apparatus 101, the quality is less decreased for the area determined as the dynamic period. Here, it is set to around 15 fps. To transmit the video using the above communication line, the reproducing speed should be reduced to around one fifth.

In this way, in the transmission from the first video relay apparatus 101 to the second video relay apparatus 102, for the static period, the video is transmitted at around 1 fps through 3 fps using the communication line capable to transmit around 3 frames per second, so that the video is reproduced at a normal reproducing speed or a little faster. On the other hand, for the dynamic period, the video is transmitted at the transmission rate of around 15 fps using the communication line capable to transmit around 3 frames per second, so that the video is reproduced in slow motion. Accordingly, the video reconstructing unit 30 of the second video relay apparatus 102 reconstructs the video so as to match the original reproducing speed. Namely, for the dynamic period, the video is reconstructed by reducing an interval between the frames to one fifth so that the video becomes equivalent to the video reproduced at 30 fps. On the other hand, for the static period, the video is reconstructed by extending the interval between the frames to 10 through 30 times so that the reproducing speed of the video becomes equivalent to the video of 30 fps.

The sending unit 40 sends the reconstructed video to the terminal 400. At the terminal 400, while the video with a low quality is presented for the static period, the video with a high quality can be presented for the dynamic period.

### Embodiment 3.

In this embodiment, another example will be explained, in which the fixed camera 300 monitors a ship sailing on the sea.

The configuration of the video relay apparatus and the video distribution system are almost the same as ones in the first embodiment shown in Figs. 1 and 2.

In the present embodiment, the area is not divided in the direction of time axis (Z axis), but divided within a frame (X, Y axes).

Next, the operation will be discussed.

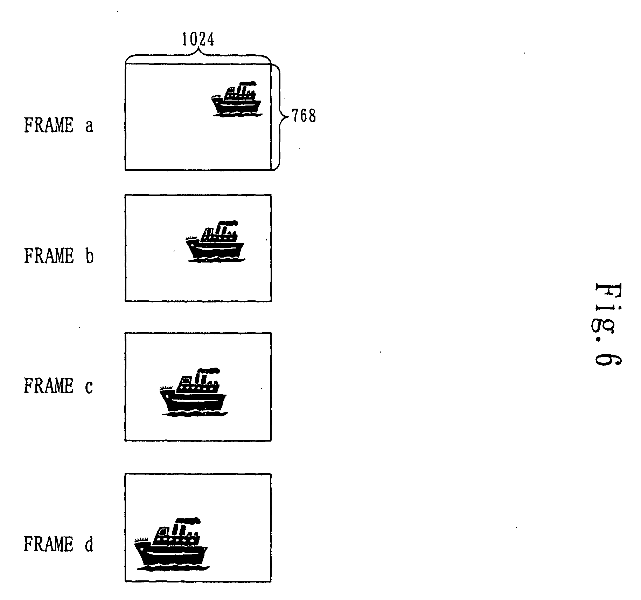

The receiving unit 10 receives the video data distributed by the server 200 and stores the video data in the storing unit 20. Fig. 6 shows an example of the received video. Here, it is assumed that the number of pixels of each frame is, for example, 1024 pixels for X axis and 768 pixels for Y axis (1024 * 768 pixels). In each of the frames that form the video, the ship is shot, moving from the right side to the left side according to time.

The area defining unit 60 defines the area based on the detected result of the motion of the object detected by the video analyzing unit 50.

The video analyzing unit 50 obtains the motion of the object, for example, in the following way. First, by generating a differential image between two video frames, only the area including the moving ship is extracted. By performing a pattern matching of the extracted area including the ship between the two video frames, it is determined how this area has moved.

Such matching between the frames can be performed for every receipt of a video frame with the directly previous video frame, or, for example, the video frame is selectively extracted every second and the matching is performed only for the selected frame. By combining the motion information obtained above, how the object has moved in a series of the frames can be observed.

The area defining unit 60 divides the area into the area including the object and the other area based on the move information of the object detected by the video analyzing unit 50.

Further, the area classifying unit 70 classifies each of the divided areas. Here, the area is classified to a concerned area which includes the object and an unconcerned area which does not include the object, and the classified result is saved.

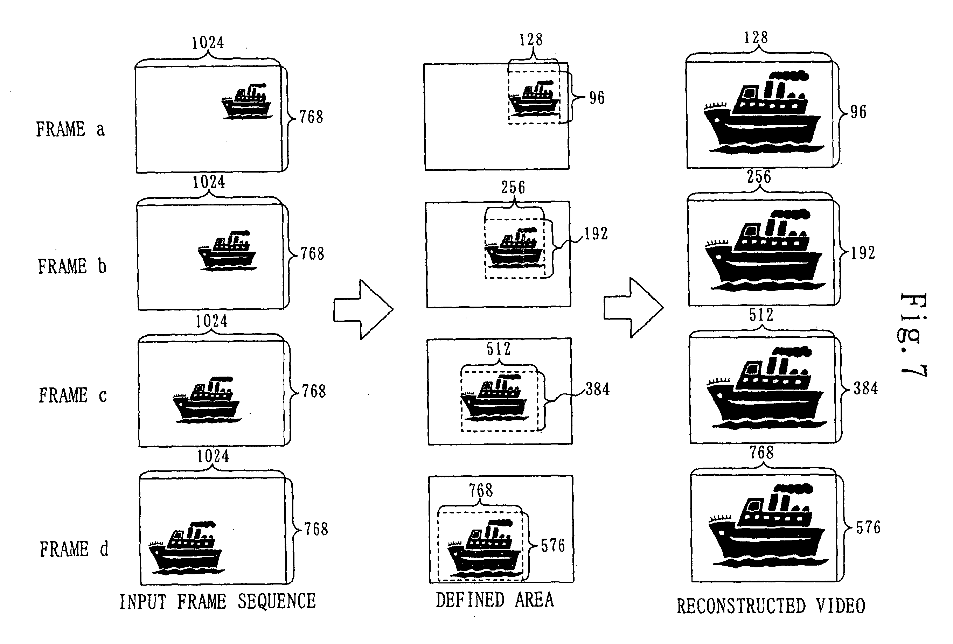

The video reconstructing unit 30 reconstructs the video based on the area information classified by the area classifying unit 70. If the video received from the server 200 is transmitted as it is with a high quality, it takes more than the actual time, so that for the area other than the area including the object, defined for each classification, the video data is transmitted with decreasing its quality or the transmission is omitted. In the example of Fig. 7, the video reconstructing unit 30 extracts only the concerned area including the object, which is shown by a broken line, and transmits the data, but omits transmission of the data for the unconcerned area. Namely, in each of a frame having 1024 * 768 pixels, the image is extracted from a range including the area as a clipping range and reconstructed. The reconstruction here means that, for example, together with an instruction to switch the display mode of the terminal 400, the extracted video data is directly sent to the terminal 400 without increasing the amount of the extracted data. For example, the video reconstructing unit 30 extracts 128*96 pixels in frame a and sends the image data of 128*96 pixels together with the expansion display instruction instructing to expand the 1024*768 pixels on the screen of the terminal 400. Or, the extracted data is expanded and transmitted without increasing the amount of the extracted data.

This is because by omitting the video of the area not including the object, the quality of the video of the area including the object would not be decreased, but can remain the same.

The transmission amount of each of frames a, b, c, and d is reduced as follows:
frame a: (128 * 96) / (1024 * 768) = 0.015
frame b: (256 * 192) / (1024 * 768) = 0.062
frame c: (512 * 384) / (1024 * 768) = 0.254
frame d: (768 * 576) / (1024 * 768) = 0.562

In the example shown in the figure, the area other than the selected area is completely omitted, and the selected area is enlarged up to full-screen displayed in the terminal 400. In another way, it is considered that the quality of the selected area is only made high, and the quality of the other area is decreased and the video is reconstructed.

The video reconstructed in this way is transmitted from the sending unit 40 to the terminal 400.

According to the above method, since the quality of the area other than the area including the object is decreased or the data of such area is omitted, it is possible to distribute the video data of the area including the object with a high quality or at a high frame rate with the limited transmission amount.

### Embodiment 4.

In the foregoing first, second, and third embodiments, the area is defined or classified by the area defining unit 60 or by the area classifying unit 70 based on the result of the video analysis by the video analyzing unit 50. Here, another embodiment will be shown, in which the area on the time axis (Z axis), namely, the area of the time period is defined or classified based on the user's manipulation at the terminal 400.

A configuration of the video distribution system of the embodiment is the same as one of the second embodiment, and as shown in Fig. 4, the video relay apparatuses 101 and 102 are placed at the server 200 side and the terminal 400 side, respectively, and they are connected with the communication line. Here, the two video relay apparatuses 101 and 102 coupled together with the communication line are considered as one video relay apparatus 100.

Further, the first video relay apparatus 101 is provided with a manipulated information receiving unit for receiving the manipulated information of the user from the terminal 400, and the first video relay apparatus 101 and the terminal 400 can communicate bi-directionally. Further, the second video relay apparatus 102 is provided with a request receiving unit for receiving a request from the first video relay apparatus 101, and the second video relay apparatus 102 and the first video relay apparatus 101 can communicate bi-directionally.

At this time, the transmission capacity of each of between the server 200 and the video relay apparatus 100 and the video relay apparatus 100 and the terminal 400 is 30 frames per second, and on the other hand, around 3 frames per second can be transmitted from the first video relay apparatus 101 of the server 200 side to the second video relay apparatus 102 of the terminal 400 side.

The first video relay apparatus 101 of the server 200 side receives the video of 30 frames per second from the server 200 and stores the video in the storing unit 20. Since the first video relay apparatus 101 of the server 200 side can transmit only 3 videos per second to the second video relay apparatus 102 of the terminal 400 side, the video reconstructing unit 30 of the second video relay apparatus 102 of the terminal 400 side reduces the frame rate to one tenth to reproduce the video and transmits three frames of the reproduced video per second to the terminal 400. On the screen of the terminal 400, the video transmitted from the video relay apparatus 100 is displayed sequentially at 3 frames per second.

Next, it is assumed that the user notices some event to be observed within the video displayed on the terminal 400. The user of the terminal 400 specifies the area that includes the event to be observed in the video with manipulation of the terminal 400. Here, the area is defined by the start time, the end time, and the locations of the video of each time. The user specifies the area within the video with manipulation of the terminal 400, for example, in the following way.

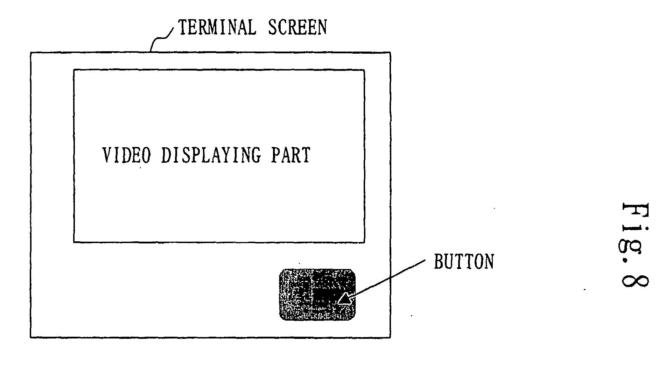

Namely, as shown in Fig. 8, a button is displayed on the screen, and the user presses this button when the user notices the event to be observed. Times being some seconds before and after the time displayed when the button is pressed are deemed as the start time and the end time of the area, and the information is sent to the video relay apparatus 100 (the second video relay apparatus 102). The area defining unit 60 of the second video relay apparatus 102 of the video relay apparatus 100 defines an area of the specified time period based on the information.

Another way can be considered, in which the user directly clicks a concerned object on the screen. Times being some seconds before and after the time when the object is clicked are deemed the start time and the end time, and a predetermined range around the location of the clicked point is deemed as an area. When this information is sent to the video relay apparatus 100, the area defining unit 60 of the second video relay apparatus 102 of the video relay apparatus 100 defines an area based on the information of the location and the time.

The area defined in the above ways is further classified into the concerned area by the area classifying unit 70 of the second video relay apparatus 102.

The second video relay apparatus 102 informs the first video relay apparatus 101 of the concerned area. The area classifying unit 70 of the first video relay apparatus 101 saves this concerned area.

At this time, the reproduction of the concerned area is in progress. The video reconstructing units 30 of the first video relay apparatus 101 and the second video relay apparatus 102 return to the initial point of the concerned area and reproduce the video in a way different from the normal. Normally, the video is reproduced with setting the frame rate to one tenth, considering the transmission capacity of the communication line; however, the video is reproduced by setting the frame rate to around 15 frames per second, that is, about a half for the concerned area. If this video is transferred as it is, the data exceeds the transmission capacity, so that the first video relay apparatus 101 reduces the reproducing rate to one fifth, and the second video relay apparatus 102 sets the reproducing rate to the original. If the user specifies the concerned area after the distribution of the area is finished, the second video relay apparatus 102 must have received the video with a low quality, and the video with a low quality is stored in the storing unit 20. Further, since the first video relay apparatus 101 must have stored the video as it is with a high quality received from the server 200, the video reconstructing unit 30 of the second video relay apparatus 102 can request remaining video data from the video reconstructing unit 30 of the first video relay apparatus 101. The video reconstructing unit 30 of the second video relay apparatus 102 receives the remaining data from the video reconstructing unit 30 of the first video relay apparatus 101, and then the video reconstructing unit 30 of the second video relay apparatus 102 can reconstruct the video with a high quality by combining the video with a low quality which has been already stored.

If the time between the start time and the end time is 5 seconds, it takes 25 seconds to transmit the reconstructed video from the first video relay apparatus 101 to the second video relay apparatus 102. Here, the second video relay apparatus 102 waits until the end of the transmission of the reconstructed video from the video reconstructing unit 30 of the first video relay apparatus 101, and the video reconstructing unit 30 of the second video relay apparatus 102 reads and reproduces the stored video in the storing unit 20 of the second video relay apparatus 102, which enables the terminal 400 to reproduce the video at 15 fps for the concerned area.

Further, while the video of the concerned area is distributed, the server distributes the video of next unconcerned area. This video can be stored in the storing unit 20 of the first video relay apparatus 101, and after the distribution of the concerned area to the second video relay apparatus 102 from the first video relay apparatus 101 is finished, the distribution is switched to the distribution of the unconcerned area.

### Embodiment 5.

In the following, another embodiment will be described, in which the area defining unit 60 defines the area based on the video analysis result of the video analyzing unit 50, and the area is classified by the manipulation of the user at the terminal 400.

A configuration of the video distribution system of the present embodiment is the same as one of the fourth embodiment, and as shown in Fig. 4, the video relay apparatuses 101 and 102 are placed at the server 200 side and the terminal 400 side, respectively, and they are connected with the communication line. Here, the two video relay apparatuses 101 and 102 coupled with the communication line is deemed as one video relay apparatus 100.

Further, the operation of the video distribution system is the same one in the third embodiment, and hereinafter a different point from the third embodiment will be explained.

The area defining unit 60 of the first video relay apparatus 101 defines information of the area as the first embodiment. The first video relay apparatus 101 sends the information of the area to the terminal 400 through the second video relay apparatus 102.

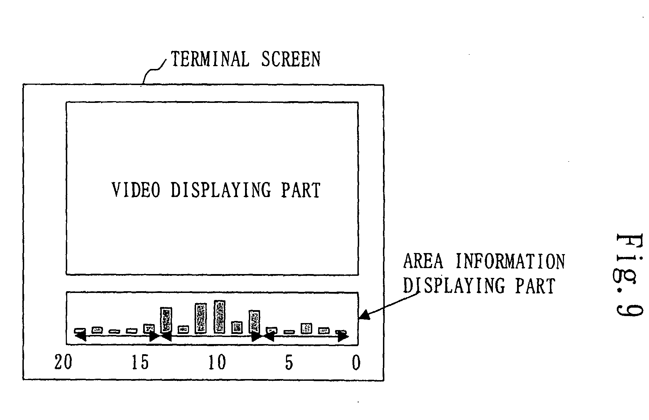

Fig. 9 shows an example of the screen of the terminal 400 of the video distribution system of the embodiment.

A video displaying part on the screen is a part showing the video as well as the fourth embodiment, and an area information displaying part is a part showing the information of the area defined by the area defining unit 60 of the first video relay apparatus 101 and sent to the terminal 400 through the second video relay apparatus 102. In the example of the figure, the graph of the change amount of the video is displayed for each of the areas defined by the area defining unit 60 of the first video relay apparatus 101 by dividing the video based on the change amount of the video as well as the first embodiment. Here, a numeral shown at the bottom of the area information displaying part denotes a number of seconds prior to the current time. In this example, the change amount is shown by the graph in the area information displaying part, but downsized images each of which represents each area can be displayed instead.

The user selects the area to be observed by referring to the display of the area information displaying part. By specifying the selected area with such as clicking the corresponding part in the area displaying part, the information of the selected area is transferred to the video relay apparatus 100. The area classifying unit 70 of the video relay apparatus 100 classifies the area to the concerned area.

The operation of the video relay apparatus 100 is the same as one in the fourth embodiment, and the video relay apparatus 100 reads and reconstructs the area classified as the concerned area.

By the above operation, the user can confirm the selected area by the video with a high quality by selecting the area to be observed from the areas defined by the video analyzing unit 50 in the video relay apparatus 100 and specifying the selected area on the screen. In this embodiment, the information of the area automatically defined by the area defining unit 60 is displayed to the user, and the user can select the area that the user wants to confirm with a high quality. Therefore, the operation of the user to specify the area can be facilitated comparing to the fourth embodiment.

### Embodiment 6.

The video relay apparatus discussed in the first embodiment (also in the third embodiment) is improved to include a manipulated information receiving unit for receiving manipulated information of the user from the terminal 400, and the storing unit 20 of the video relay apparatus is improved to receive the manipulated information of the user from the terminal, and based on the information, to make video of an arbitrary time stored in the storing unit 20 a sending object. A configuration of the present embodiment is the same as one of the first embodiment.

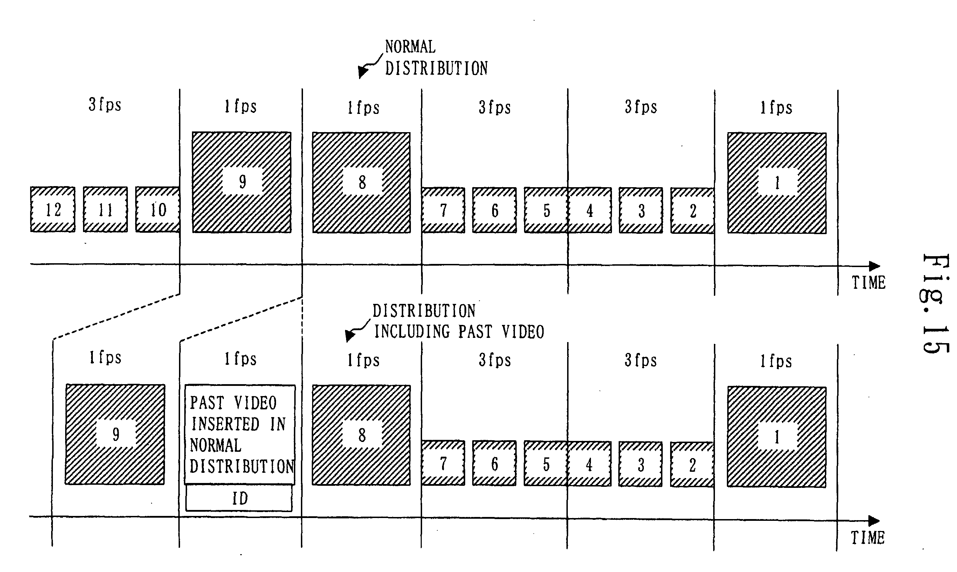

When the terminal 400 in Fig. 2 requests the video relay apparatus 100 to watch the video that has been shot three seconds before the currently distributed video, the storing unit 20 of the video relay apparatus 100 checks if the video of the requested time is stored, and if stored, the storing unit 20 distributes the video to the terminal 400. Hereinafter, the video of the requested time is called as "past video." Further, "past video" means the video of one frame of the requested time. At this time, the video distribution between the video relay apparatus 100 and the terminal 400 is controlled by the mechanism explained in the first embodiment. In this case, for example, by inserting "past video" and distributing the video, it becomes possible to distribute "past video" without much affects to the other distribution. In Fig. 15, the upper stage shows a normal distribution state. The lower stage shows a state in which one frame of "past video" is inserted between 8^{th} frame and 9^{th} frame of the normal distribution. Further, in case of "past video," by appending the identification data (ID) identifying that the video is at the requested time to the video and sending the video, the terminal 400 can receive data distinguished from the normal video distribution. Consequently, "past video" can be always displayed as a static image in a separate window on the display of the terminal 400, so that the user can inspect it again, by watching the point the user noticed as unusual. In Fig. 15, "past video" is one frame within the storing unit 20; however, as described in the first embodiment, it is possible that an area ranging some seconds before/after a specific time can be specified. In this case, if the terminal 400 repeatedly requests the specified area, the embodiment can perform repeated reproduction such as a video player. That is, it becomes possible to perform video replay. In this embodiment, a distribution method wherein "past video" is inserted in the normal video distribution is described, but other methods can be adapted: if "past video" is defined as an area, it is possible that the normal video distribution is suspended until the distribution of "past video" is completed or the normal video distribution is cancelled.

By the above configuration, the video relay apparatus of the present embodiment enables to reconfirm the video, tracing back to the past.

### Embodiment 7.

In the present embodiment, a configuration of the video distribution system is the same as one of the second embodiment (also the fourth and fifth embodiments) and is shown in Fig. 4. The storing unit 20 of the first video relay apparatus 101, which has been discussed in the fourth embodiment, is improved to receive the request from the second video relay apparatus 102 and, based on the request, to make video of an arbitrary time stored in the storing unit 20 a sending object. Further, the storing unit 20 of the second video relay apparatus 102 is improved to receive the request from the terminal 400 and display a list of the video stored in the storing unit 20.

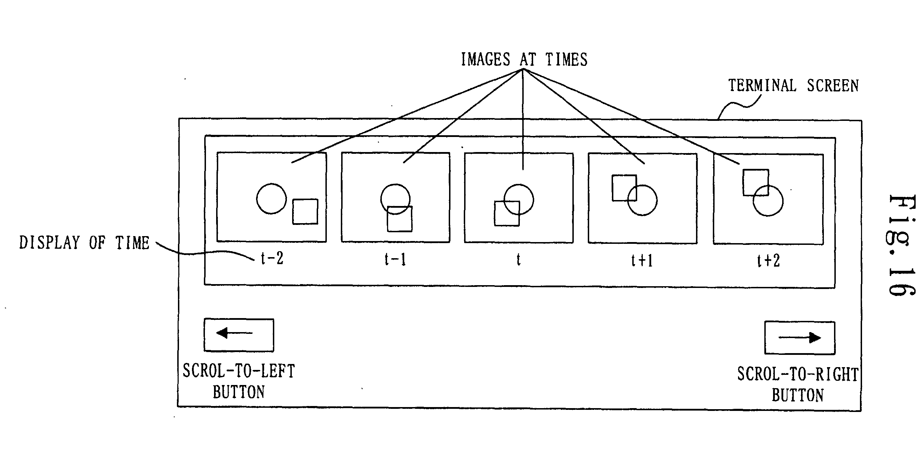

It is assumed that the user finds some event to be observed within the video displayed on the terminal 400. The user requests a list of the video frames stored in the storing unit 20 of the second video relay apparatus 102 by manipulation through the terminal 400. The terminal 400 displays the requested list on the display screen as shown in Fig. 16, for example. In Fig. 16, pushing a scroll-to-right button displays time-sequentially new video (the value of x in 't + x' is increased), and on the contrary, pushing a scroll-to-left button displays time-sequentially old video (the value of x in 't - x' is increased). This operation enables to specify the video of a certain time that the user wants to watch. When the user specifies a time, which the user wants to watch, using the terminal 400, such request is sent to the first video relay apparatus 101 through the second video relay apparatus 102. On receiving the request, the first video relay apparatus 101 checks if the video of the requested time exists in the storing unit 20, and if it exists, the first video relay apparatus 101 distributes this video to the second video relay apparatus 102. Here, the distribution mechanism can be implemented in the way explained in the sixth embodiment. Namely, the requested video is inserted in the normal distribution, and further the requested video can be identified as the video requested by the second video relay apparatus 102 with the identification data (ID) appended to the requested video. Therefore, it is possible to always display the requested video on the terminal 400 as well as the sixth embodiment.

By the above configuration, the second video relay apparatus 102 stores only the video with the distributed quality, so that the second video relay apparatus 102 can provide the terminal 400 with the list using the stored video, and at the terminal 400 the user can request for distribution of a video of an arbitrary time shown in the displayed list from the first video relay apparatus 101. Accordingly, this system is effective in case the user notices an unusual event and wants to see the video of the unusual event with a higher quality.

### Industrial Applicability

According to the preferred embodiment of the invention, the video reconstructing unit reconstructs the video of the area classified by the analyzing/classifying unit and sends the reconstructed video to the terminal. Therefore, the video distribution system using the communication unit with a limited transmission capacity can display and confirm the video with a high quality by inserting the video relay apparatus between the server and the terminal.

Further, according to the preferred embodiment of the invention, by adjusting at least one of selection of the video, change of the image quality of the video, and reproducing speed of the video, the video reconstructing unit can change the quality of the video.

Further, according to the preferred embodiment of the invention, the video reconstructing unit can reconstruct the video for the area defined by the area defining unit based on the classified result of the area classifying unit.

Further, according to the preferred embodiment of the invention, the video analyzing unit includes the video analyzing unit for analyzing the video, so that the area defining unit can define the area based on the analysis result by the vide analyzing unit, and the area classifying unit can classify the area based on the analysis result by the video analyzing unit.

Further, according to the preferred embodiment of the invention, the video analyzing unit analyzes change amount of the object or the imaging device, and the video reconstructing unit reconstructs the video by changing the reproducing speed according to the rate of the change amount of the object or the imaging device for each of the periods divided along the time axis. Accordingly, it is possible to confirm the scene in which the change amount is large with a high quality.

Further, according to the preferred embodiment of the invention, the video analyzing unit detects the motion of the object, and the video reconstructing unit reconstructs the video according to the location of the object at each time, so that it is possible to confirm a part in which a specific object is shot by selectively displaying the part of the video with a high quality.

Further, according to the preferred embodiment of the invention, the area defining unit or the area classifying unit defines or classifies the period of the video, so that it is possible to confirm a part which the user wants to watch carefully by displaying the part of the video with a high quality.

Further, according to the preferred embodiment of the invention, the video relay apparatus is placed between the server and the terminal, so that even if the communication line having a limited capacity is used, it is possible to confirm a specific scene by displaying the video with a high quality.

## Claims

1. A video relay apparatus comprising:
a receiving unit for receiving video;
a storing unit for temporarily storing the video received by the receiving unit;
an analyzing/classifying unit for analyzing the video and classifying the video into areas;
a video reconstructing unit for changing quality of the video stored in the storing unit based on a classified result by the analyzing/classifying unit and reconstructing the video; and
a sending unit for sending the video reconstructed by the video reconstructing unit.

2. The video relay apparatus of claim 1, wherein
the video reconstructing unit changes the quality of the video by adjusting at least one of a selection of the video, a change of image quality of the video, and a reproducing speed of the video.

3. The video relay apparatus of claim 1, wherein
the analyzing/classifying unit includes:
an area defining unit for dividing the video into periods so as to define concerned areas; and
an area classifying unit for classifying the areas defined by the area defining unit.

4. The video relay apparatus of claim 3, wherein
the analyzing/classifying unit further includes a video analyzing unit for analyzing the video,
the area defining unit defines the area based on an analysis result by the video analyzing unit, and
the area classifying unit classifies the area based on the analysis result by the video analyzing unit.

5. The video relay apparatus of claim 4, wherein
the video analyzing unit analyzes a change amount of at least one of an object and an imaging device,
the area classifying unit classifies the areas into a static period and a dynamic period based on the change amount of at least one of the object and the imaging device, and
the video reconstructing unit reconstructs the video by increasing the quality for the dynamic period.

6. The video relay apparatus of claim 4, wherein
the video analyzing unit analyzes a change amount of at least one of an object and an imaging device,
the area classifying unit classifies the areas into a static period and a dynamic period based on the change amount of at least one of the object and the imaging device, and
the video reconstructing unit reconstructs the video by decreasing the quality for the dynamic period.

7. The video relay apparatus of claim 4, wherein
the video analyzing unit detects a motion of an object,
the area classifying unit classifies the area into an area including the object and an area not including the object, and
the video reconstructing unit selects the area including the object and reconstructs the video.

8. The video relay apparatus of claim 3, wherein the area defining unit receives manipulated information of a user from a terminal and divides the video to the area based on the information.

9. The video relay apparatus of claim 3, wherein the area classifying unit receives manipulated information from the user at the terminal and classifies the area based on the information.

10. A video distribution system distributing video from a server to a terminal comprising
a video relay apparatus, located between the server and the terminal, having:
a receiving unit for receiving the video;
a storing unit for temporarily storing the video received by the receiving unit;
an analyzing/classifying unit for analyzing the video stored by the storing unit and classifying the video into areas;
a video reconstructing unit for changing quality of the video stored by the storing unit and reconstructing the video based on a classified result by the analyzing/classifying unit; and
a sending unit for sending the video reconstructed by the video reconstructing unit,
wherein the video reconstructing unit of the video relay apparatus reconstructs the video by reducing reproducing speed of the video for specified areas among the areas classified.

11. A video distribution system for distributing video from a server to a terminal comprising two video relay apparatuses, as a first video relay apparatus and a second video relay apparatus, located between the server and the terminal, each of the two video relay apparatuses having:
a receiving unit for receiving the video;
a storing unit for temporarily storing the video received by the receiving unit;
an analyzing/classifying unit for analyzing the video stored by the storing unit and classifying the video into areas;
a video reconstructing unit for changing quality of the video stored by the storing unit and reconstructing the video based on a classified result by the analyzing/classifying unit; and
a sending unit for sending the video reconstructed by the video reconstructing unit, wherein
the first video relay apparatus reconstructs the video by reducing a reproducing speed of the video for specified areas among the areas classified and sends the video to the second video relay apparatus, and
the second video relay apparatus reconstructs the video received from the first video relay apparatus by changing the reproducing speed back to an original reproducing speed.

12. The video relay apparatus of claim 1, wherein the video relay apparatus receives a request from the terminal and sends video of an arbitrary time stored in the storing unit based on the request.

13. A video distribution system for distributing video from a server to a terminal comprising two video relay apparatuses, as a first video relay apparatus and a second video relay apparatus, located between the server and the terminal, each of the two video relay apparatuses having:
a receiving unit for receiving the video;
a storing unit for temporarily storing the video received by the receiving unit;
an analyzing/classifying unit for analyzing the video stored by the storing unit and classifying the video into areas;
a video reconstructing unit for changing quality of the video stored by the storing unit and reconstructing the video based on a classified result by the analyzing/classifying unit; and
a sending unit for sending the video reconstructed by the video reconstructing unit, wherein
the second video relay apparatus receives a request from the terminal and sends the request from the terminal to the first video relay apparatus,
the first video relay apparatus receives the request from the second video relay apparatus and sends the video of an arbitrary time stored in the storing unit based on the request, and
the second video relay apparatus stores the video sent from the first video relay apparatus and distributes the video to the terminal.

14. A video distribution system for distributing video from a server to a terminal comprising a first video relay apparatus and a second video relay apparatus located between the server and the terminal, wherein
the first video relay apparatus reconstructs the video of specified areas by reducing a reproducing speed and sends the video to the second video relay apparatus, and
the second video relay apparatus reconstructs the video received from the first video relay apparatus by changing the reproducing speed back to an original reproducing speed.

15. A video distribution system for distributing video from a server to a terminal comprising a first video relay apparatus having a first storing unit for storing the video and a second video relay apparatus having a second storing unit for storing the video located between the server and the terminal, wherein
the second video relay apparatus receives a request from the terminal and sends the request to the first video relay apparatus,
the first video relay apparatus receives the request from the second video relay apparatus and sends the video of an arbitrary time stored in the first storing unit of the first video relay apparatus to the second video relay apparatus based on the request,
the second video relay apparatus stores the video sent from the first video relay apparatus in the second storing unit of the second video relay apparatus and distributes the video to the terminal.

16. A video relay method comprising:
receiving video through a communication line;
temporarily storing the video received in a memory;
analyzing the video stored in the memory and classifying the video into areas;
reconstructing the video based on a classified result by changing quality of the video stored in the memory; and
sending the video reconstructed.
